# EUROPÄISCHE PATENTSCHRIFT

(11) **EP 1 195 223 B1**
(45) Veröffentlichungstag und Bekanntmachung des Hinweises auf die Patenterteilung: **09.04.2003**
(21) Anmeldenummer: 01122068.8
(22) Anmeldetag: 14.09.2001
(51) Int. Cl.: B23Q 11/00, B65D 88/68, B65G 65/44, B65G 65/48

(54) **Sammelbehälter für Schüttgut mit einer Transportpumpe oder einem Absaugrohr**
Collecting container for bulk material with a conveyor pump or with a suction tube
Récipient collecteur pour une matière en vrac à pompe d'alimentation ou avec un tube de succion

(30) Priorität: 05.10.2000 DE 10049626; 27.05.2001 DE 20109330 U
(43) Veröffentlichungstag der Anmeldung: 10.04.2002
(73) Patentinhaber: TBE Habermehl Anlagenbau GmbH & Co. KG, 35510 Butzbach-Ebersgöns (DE)
(72) Erfinder: Binder, Bruno, 72175 Dornhan (DE)
(74) Vertreter: Schneider, Peter Christian

(56) Entgegenhaltungen:
- EP-A- 0 750 966
- DE-A- 2 541 583
- DE-A- 3 523 549
- DE-A- 3 611 606
- DE-U- 8 234 176
- DE-U- 8 418 523
- DE-U- 9 419 379
- US-A- 3 980 186
- US-A- 4 635 408

## Beschreibung

Die Erfindung betrifft einen Sammelbehälter für Schüttgut mit einer Transportpumpe oder einem Absaugrohr mit den Merkmalen des Oberbegriffs des Anspruchs 1.

Ein derartiger Sammelbehälter ist aus der EP 0 750 966 A1 bekannt. Dieser bekannte Sammelbehälter weist eine Transportpumpe zur Förderung von flüssigen Medien mit Produktionsrückständen, z.B. Späne, Kühl- und Schmiermittel auf. Dabei ist der Sammelbehälter als zylindrischer Topf mit einem im wesentlichen ebenen Behälterboden ausgebildet. Ein über den Behälterboden laufender, zentral gelagerter Räumerarm führt die auf dem Behälterboden abgelagerten Späne zu der Transportpumpe. Ein derartiger Sammelbehälter läßt jedoch noch Wünsche offen.

Ferner ist aus der DE 36 11 606 A1 eine Vorrichtung zum Entleeren eines Silos mit einer mittig angeordneten Entleerungsöffnung bekannt, bei der mittels mehrerer Schleppketten, die mit ihrem einen Ende an einer im Bereich der Behälterwandung verlaufenden angetriebenen Kette und mit ihrem anderen Ende an einem mittig angeordneten Karussell befestigt sind, das Schüttgut zur Mitte gefördert wird. Die Behälter können hierbei rund oder eckig ausgestaltet sein.

Aus der DE 94 19 379 U1 ist eine Austragsvorrichtung für schwer förderbare Schüttgüter bekannt, bei der in einem zylinderförmigen Behälter, z.B. einem Silo oder dgl., mit Hilfe eines starren Räumerarms, der mit einem rotierenden ringförmigen Rahmen und mittigen Drehlager verbunden ist, das Schüttgut einer sich quer über den Boden erstreckenden Austragsöffnung zugeführt wird.

Weitere sich drehende Vorrichtungen zum Transport von Schüttgütern zu einer Entleerungsöffnung o.ä. sind aus der DE 25 41 583 B2 und der DE 82 34 176 U1 bekannt.

Aus der DE 84 18 523 U1 ist eine Austragsvorrichtung in Form eines Gleitrahmens für Bunker mit rundem oder polygonalem Querschnitt bekannt. Hierbei wird der Gleitrahmen mittels zweier Hydraulikzylinder hin und her verschoben, wodurch das Schüttgut einer quer durch den gesamten Bunker verlaufenden Rinne zugeführt wird.

Der Erfindung liegt die Aufgabe zu Grunde, einen Sammelbehälter der eingangs genannten Art zu verbessern. Diese Aufgabe wird erfindungsgemäß durch einen Sammelbehälter mit den Merkmalen des Anspruchs 1 gelöst. Vorteilhafte Weiterentwicklungen bzw. Ausgestaltungen sind Gegenstand der Unteransprüche.

Erfindungsgemäß ist mindestens ein in der Nähe des Behälterbodens bewegbarer Räumerarm vorgesehen, wobei der Räumerarm an einem Zugmittel angeordnet ist, mit dem er bewegt werden kann. Der Räumerarm wird im Bereich der Behälterwandung geführt. Aufgrund der Schwerkraft wird der Räumerarm während seiner horizontalen Bewegung am Behälterboden gehalten und vermischt das Schüttgut, das in trockener Form oder in einem Trägermedium, bspw. Wasser, vorliegen kann. Wenn das Schüttgut in trockener Form vorliegt, so kann das Schüttgut durch ein Absaugrohr abgesaugt werden, bspw. über Vakuumtransportluft. Liegt das Schüttgut in einem flüssigen Trägermedium vor, so erfolgt das Absaugen über eine Transportpumpe. Zur Gewährleistung eines guten Räumverhaltens kann der Räumerarm im vom Zugmittel entfernteren Bereich verstärkt sein. Aufgrund der Ausgestaltung kann die erfindungsgemäße Vorrichtung in nahezu beliebig geformten Sammelbehältern mit im wesentlichen ebenem Boden verwendet werden. Insbesondere kann der Sammelbehälter die Auffangwanne einer Maschine zur spanenden Bearbeitung ersetzen.

Vorzugsweise läuft das Zugmittel in der Nähe der Behälterwandung im Sammelbehälter um, wodurch ein vollständiges Sammeln des Streuguts vom gesamten Behälterboden gewährleistet werden kann. Dabei kann eine Gleitschiene vorgesehen sein.

Eine gute Führung des Räumerarms wird durch die Befestigung desselben über zwei in horizontaler Richtung voneinander beabstandete Punkte am Zugmittel sichergestellt. Gemäß einer besonders bevorzugten Variante ist Räumerarm an einem Befestigungspunkt am Zugmittel befestigt und an einem nachfolgenden Bereich in Anlage an der Behälterwandung, an der er entlang gleitet. Vorzugsweise handelt es sich bei dem Zugmittel um eine Kette, die über in Ecken oder Rundungen der Behälterwandung angeordnete Kettenräder läuft. Durch geeignete Anzahl und Anordnung der Kettenräder lassen sich nahezu beliebige Formen von Sammelbehältern ausgestalten. Ferner lassen sich auf einfache Weise Baukastensysteme für beliebige Abmessungen von Sammelbehältern ausgestalten. Alternativ sind Ausführungsformen mit Seilen und entsprechenden Umlenkrollen möglich. Größen von 0,2m × 0,2m bis 200m × 20m sind möglich. Auch kann eine entsprechende Vorrichtung bei einem nahezu beliebig ausgebildeten Sammelbehälter mit im wesentlichen geraden Bereichen der Seitenwände verwendet werden.

Eine gute Räumwirkung weist ein in Bewegungsrichtung V-förmiger Räumerarm auf, wobei es im wesentlichen auf den Verlauf der Schenkel und nicht auf die exakte Ausgestaltung des Zwischenbereichs ankommt. Es sind durchaus auch U-förmige Räumerarme mit einem offenen U, also nicht parallel verlaufenden Schenkeln möglich. Vorteilhafterweise ist der Räumerarm symmetrisch in Bezug auf seine normale Bewegungsrichtung ausgestaltet, d.h. die Winkelhalbierende im Scheitelpunkt zeigt in Bewegungsrichtung. Dabei sollte der Winkel zwischen der Winkelhalbierenden und jedem Schenkel des Räumerarms maximal 45° betragen, vorzugsweise 30°, damit eine optimale Förderung des zu sammelnden Schüttguts bewirkt wird.

Gemäß einer weiteren, besonders vorteilhaften Ausführungsform eilt das wandnahe Ende des Räumerarms dem innenraumnahen Ende des Räumerarms voraus. Vorzugsweise ist der Räumerarm hierbei V-förmig ausgebildet, wobei das innenraumnahe Ende einen Winkel von mindestens 90°, vorzugsweise mindestens 92° zur Bewegungsrichtung, und vorzugsweise maximal 100° zur Bewegungsrichtung einschließt.

Die Absaugwirkung der Transportpumpe für das sich im Sammelbehälter befindliche Schüttgut kann dadurch unterstützt werden, daß die Transportpumpe im wesentlichen direkt über einem Bereich angeordnet ist, den der Räumerarm passiert. Dabei passiert der etwa V-förmig ausgebildete Räumerarm mit seinem Scheitelpunkt die Nähe des Mittelpunktes der Ansaugöffnung der Transportpumpe. Es können auch mehrere Transportpumpen und/oder Ansaugöffnungen vorgesehen sein.

Die Verwendung von mehreren Räumerarmen erhöht die Förderleistung. Die verlängerte oder vergrößerte Ausgestaltung eines Räumerarmes ermöglicht, daß auch der mittlere Bereich des Sammelbehälters geräumt wird und verhindert Überschneidungen der Räumerarme. Hierfür ist vorzugsweise der zum Innenraum zeigende Schenkel verlängert ausgebildet. Mehrere Räumerarme verbessern ferner die Dosierung der Schüttgutzufuhr für die Transportpumpe. So werden häufiger kleinere Mengen von Schüttgut zugeführt, die leichter abgesaugt werden können.

Gemäß.einer bevorzugten Ausführungsform weist der Sammelbehälter entlang der Behälterwandung eine Gleitschiene und der Räumerarm einen Vorsprung an einem in Bewegungsrichtung nacheilenden Schenkel auf, der an der Gleitschiene anliegt.

Vorzugsweise ist im Sammelbehälter innerhalb des vom umlaufenden Zugmittel definierten Bereichs zumindest ein innerer Räumerarm mit einem Antrieb vorgesehen. Es können auch mehrere Antriebe mit jeweils mindestens einem Räumerarm vorgesehen sein. Eine derartige Anordnung ist insbesondere für sehr große Sammelbehälter oder für Sammelbehälter mit einem derartigen Grundriß, daß nicht der gesamte Behälterboden von dem oder den äußeren Räumerarmen geräumt werden kann, geeignet.

Gemäß einer bevorzugten Ausführungsform rotiert der innere Räumerarm um eine senkrechte Achse und fördert das Schüttgut von innen nach außen. Vorteilhaft ist eine spiralförmige Ausbildung des inneren Räumerarms, wobei sich die Spirale entgegen der Drehrichtung öffnet. Ebenfalls vorteilhaft ist, wenn der innere Räumerarm in Bewegungs- oder Drehrichtung zumindest teilweise etwas abgeflacht ist und auf der Seite in Bewegungs- oder Drehrichtung eine als Schiebefläche dienende Seitenfläche aufweist.

Vorzugsweise dreht sich der innere Räumerarm schneller als daß der äußere Räumerarm umläuft, insbesondere wird der innere Räumerarm bei gleicher Bewegungs- oder Drehrichtung mit mehr Umläufen pro Zeiteinheit angetrieben als der äußere Räumerarm.

Damit eine möglichst vollständige Räumung durch die Räumerarme erfolgt, überschneiden sich die Räumbereiche des äußeren bzw. der äußeren und des inneren bzw. der inneren Räumerarme. Hierbei wird, gemäß einer bevorzugten Ausführungsform, der äußere Räumerarm, insbesondere der längere äußere Räumerarm, von dem schneller umlaufenden und somit überholenden inneren Räumerarm so weit mitgenommen, bis dieser ihn überholen kann, vorzugsweise ohne vom Boden abzuheben. Hierfür ist der äußere Räumerarm in Bewegungsrichtung schwenkbar am Zugmittel befestigt.

Alternativ wird der mindestens eine Antrieb bei gleicher Drehrichtung in Abhängigkeit von der Umlaufgeschwindigkeit des Zugmittels und/oder mindestens eines weiteren Antriebs angetrieben oder gesteuert, so daß keine Interferrenz auftritt.

Gemäß einer weiteren bevorzugten Ausführungsform ist im Sammelbehälter ein oder mehrere Niederdrücker vorgesehen, die Anhäufungen von Schüttgut niederdrücken und so verteilen, so daß der Sammelbehälter sehr flach gehalten werden kann und eine Behinderung des Spänebrechers durch Anhäufungen verhindert wird. Hierfür weist der Niederdrücker vorzugsweise eine Schräge auf, bei der sich der Abstand zwischen Niederdrücker und Behälterboden in Bewegungsrichtung des Räumerarms verringert.

Gemäß einer anderen bevorzugten Ausführungsform ist im Sammelbehälter eine Zentriervorrichtung vorgesehen, welche das von den Räumerarmen erfaßte Schüttgut derart zentriert, daß es von der Transportpumpe optimal erfaßt werden kann. Die Zentriervorrichtung kann bspw. durch Bürsten, Schiebebleche, zyklisch mitlaufende Zentrierschnecken oder Schieber oder Spüldüsen gebildet werden.

Gemäß einer besonders bevorzugten Ausführungsform erfolgt die Konzentration des Schüttguts durch die Umlenkbewegung der Räumerarme infolge der vor-rück-vor-Bewegung derselben.

Zur Verhinderung eines Ansaugens des Räumerarms weist derselbe vorzugsweise eine Vorrichtung auf, welche die bereichsweise ebene Oberfläche unterbricht, so daß eine Strömung am Räumerarm vorbei möglich ist, der Räumerarm nicht vom Behälterboden abgehoben wird und möglicherweise Schüttgut darunter gelangen kann und die Vorwärtsbewegung des Räumerarms nicht behindert wird. Vorzugsweise wird die Vorrichtung durch Rippen gebildet, die vom Räumerarm nach oben abstehen können, vorzugsweise aber durch das Vorsehen von Vertiefungen im Räumerarm ausgebildet sind. Alternativ können auch Durchbrüche, insbesondere (Durchgangs-)Bohrungen im Räumerarm vorgesehen sein.

Im folgenden ist die Erfindung anhand mehrerer Ausführungsbeispiele, die zum Teil in der Zeichnung dargestellt sind, näher erläutert. Es zeigen
- Fig. 1: eine schematische Draufsicht gemäß dem ersten Ausführungsbeispiel,
- Fig. 2: eine schematische Seitenansicht von Fig. 1,
- Fig. 3: einen Schnitt durch einen Räumerarm entlang der Linie III-III in Fig. 1,
- Fig. 4: eine schematische Draufsicht gemäß dem dritten Ausführungsbeispiel,
- Fig. 5: schematische Seitenansicht in Blickrichtung des Pfeiles V in Fig. 4,
- Fig. 6: eine Ansicht des Räumerarms gemäß dem dritten Ausführungsbeispiel,
- Fig. 7: eine Seitenansicht des Räumerarms in Blickrichtung des Pfeiles VII in Fig. 6,
- Fig. 8: einen Schnitt durch den Räumerarm von Fig. 6 entlang der Linie VIII-VIII,
- Fig. 9: eine schematische Draufsicht gemäß dem vierten Ausführungsbeispiel,
- Fig. 10: eine Ansicht des Räumerarms gemäß dem vierten Ausführungsbeispiel,
- Fig. 11: eine Seitenansicht des Räumerarms in Blickrichtung des Pfeiles XI in Fig. 10,
- Fig. 12: einen Schnitt durch den Räumerarm von Fig. 10 entlang der Linie XII-XII und
- Fig. 13: eine Ansicht des Räumerarms gemäß dem fünften Ausführungsbeispiel.

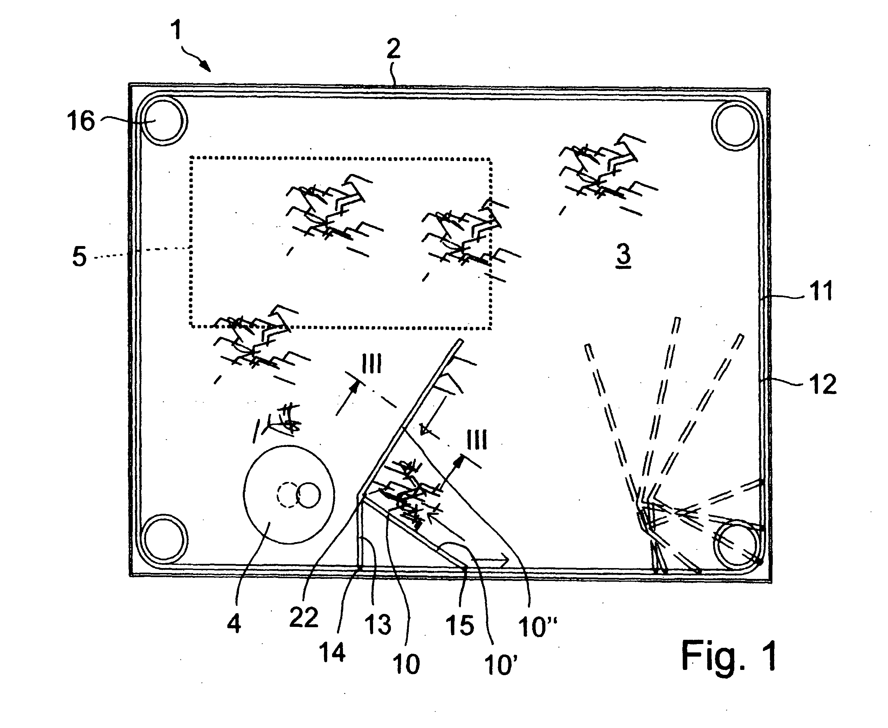

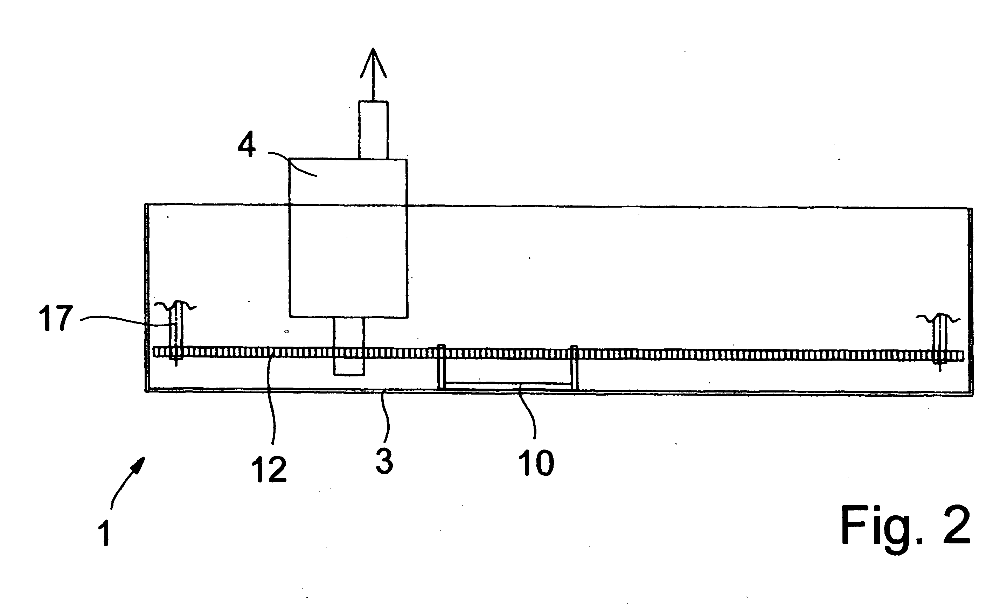

Fig. 1 zeigt ein erstes Ausführungsbeispiel mit einem Sammelbehälter 1 für Schüttgut (nicht dargestellt), das sich in Wasser als Trägermedium befindet. Trägermedium kann jedoch ein beliebiges Fluid, also bspw. auch Luft sein. Der Sammelbehälter 1 gemäß dem Ausführungsbeispiel ist 1,5 m lang und 1 m breit. Der Sammelbehälter 1 weist eine umlaufende Behälterwandung 2 und einen im wesentlichen ebenen Behälterboden 3 (siehe Fig. 2) auf. In das Innere des Sammelbehälters 1 ragt eine in Fig. 1 schematisch angedeutete Transportpumpe 4, mit deren Hilfe das Schüttgut abgesaugt werden kann. Gemäß dem Ausführungsbeispiel ist die Ansaugöffnung etwa 1,5 cm vom Behälterboden 3 beabstandet. Mit 5 ist ein gepunktet dargestellter Spänebrecher bezeichnet, welcher das Schüttgut produziert, im Ausführungsbeispiel sind dies Metallspäne. Ein Spänebrecher 5 muß jedoch nicht notwendigerweise vorhanden sein.

Im Inneren des Sammelbehälters 1 ist ein im wesentlichen V-förmig ausgebildeter Räumerarm 10 mit zwei Schenkeln 10' und 10" angeordnet, der mit Hilfe eines flexiblen Zugmittels 11 bewegt werden kann. Als Zugmittel 11 ist gemäß dem Ausführungsbeispiel eine Kette 12 vorgesehen, deren Bewegungsrichtung gemäß Fig. 1 entgegen dem Uhrzeigersinn verläuft. Die Kette 12 ist etwas vom Behälterboden 3 beabstandet (vergleiche Fig. 2). Der Räumerarm 10 ist an zwei Befestigungspunkten, nämlich über einen Schenkel 13 an einem in Bewegungsrichtung hinten liegenden Befestigungspunkt 14 und im wesentlichen direkt an einem in Bewegungsrichtung vorn liegenden Befestigungspunkt 15, an dem der Schenkel 10' des V-förmigen Räumerarms 10 angeordnet ist, an der Kette 12 befestigt, wobei der V-förmige Räumerarm 10 im wesentlichen auf dem Behälterboden 3 aufliegt. Der Schenkel 13 ist etwas vom Behälterboden 3 beabstandet, so daß eine Art Tunnel ausgebildet ist, der gemäß dem Ausführungsbeispiel etwa 1 bis 2 cm hoch ist.

Die Kette 12 ist über in Ecken oder Rundungen der Behälterwandung 2 des Sammelbehälters 1 angeordnete Kettenräder 16 geführt und wird über eines der Kettenräder 16 durch einen nicht dargestellten Motor angetrieben. Die Kettenräder 16 sind an Achsen oder Wellen 17 angeordnet, die etwas oberhalb des Behälterbodens 3 enden, so daß bei entsprechender Ausgestaltung der Räumerarm 10 auch Metallspäne mitnehmen kann, die sich unterhalb der Kette 12 abgelagert haben.

Rechts unten in Fig. 1 ist der Bewegungsverlauf des Räumerarms 10 (hier jeweils gestrichelt dargestellt) an einer Ecke des Sammmelbehälters 1 dargestellt. Der Schenkel 10", der ins Innere des Sammelbehälters 1 ragt, vollführt dabei kurzfristig eine Rückwärtsbewegung, wobei er leicht angehoben werden könnte. Sollten Partikel des Streuguts hinter den Räumarm 10 gelangt sein, besteht durch das zweite Überfahren des Bereichs die Möglichkeit, daß auch diese Partikel wieder mitgenommen werden.

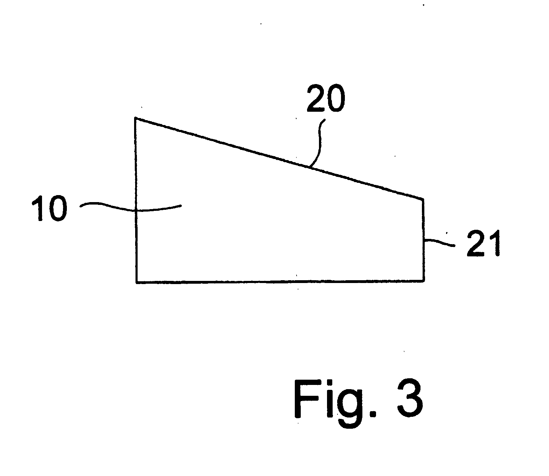

Wie in Fig. 3 dargestellt ist, weist der Räumerarm 10 im wesentlichen einen trapezförmigen Querschnitt auf, wobei seine Oberseite 20 quer zur Längsrichtung des Schenkels 10" bzw. 10' abfällt. Die schmale Seitenfläche 21 bildet eine Schiebefläche für die Metallspäne. Der Räumerarm 10 ist im wesentlichen 3 cm breit und 1 cm hoch. Verstärkungen im Bereich des Scheitelpunktes 22 sind vorgesehen, zur Vereinfachung der Zeichnung jedoch nicht dargestellt. Andere Ausgestaltungsformen, bspw. entsprechend einer Schneepflugschaufel, sind möglich.

Der V-förmige Räumerarm 10 gemäß dem ersten Ausführungsbeispiel ist nicht symmetrisch bezüglich der normalen Bewegungsrichtung ausgestaltet. Er weist mit seinem Scheitelpunkt 22 zwischen seinen beiden Schenkeln 10' und 10" einen Winkel von 90° auf. Der zum Inneren des Sammelbehälters 1 weisende Schenkel 10" weist im Ausführungsbeispiel einen Winkel zur Normalen bezüglich einer geraden horizontalen Verbindung der beiden Befestigungspunkte 14, 15 von 60° auf. Der Schenkel 10" endet etwa in Höhe des Endes des Schenkels 10', das dem Befestigungspunkt 15 entspricht, bezüglich einer Normalen im Befestigungspunkt 15. Andere Winkel und Längenverhältnisse sind möglich, wobei insbesondere auf das zweite Ausführungsbeispiel verwiesen wird. Der Schenkel 13, über den der Räumerarm 10 mit seinem in Bewegungsrichtung hinten liegenden Befestigungspunkt 14 verbunden ist, endet ebenfalls im Scheitelpunkt 22. Der Befestigungspunkt 14 liegt etwa auf der gleichen Höhe wie der Scheitelpunkt 22 bezüglich der Normalen im Befestigungspunkt 14.

Der mit Hilfe der Kette 12 entlang dem Behälterboden 3 bewegte Räumerarm 10 trifft mit seiner als Schiebefläche dienenden Seitenfläche 21 auf am Behälterboden 3 liegende Metallspäne. Dabei wird die Kette 12 mit einer Zuggeschwindigkeit von 8 bis 15 m/min bewegt. Diese Metallspäne werden in Richtung des Scheitelpunktes 22 bewegt, wo sie bei Erreichen der Transportpumpe 4 abgesaugt werden und dadurch eine Ablagerung von Metallspänen verhindert und ein Sammeln des im Sammelbehälters 1 enthaltenen Schüttguts sichergestellt wird. Aufgrund der Flexibilität der Verbindung zur Kette 12 wird ein Verklemmen des Räumerarms 10 verhindert, sofern sich - aus welchen Gründen auch immer - bereits fest mit dem Behälterboden 3 verbundene Ablagerungen gebildet haben. Durch eine feste Anordnung der Pumpe 4 in einem Bereich, der vom Scheitelpunkt 22 des Räumerarms 10 in nächster Nähe passiert wird, wird zusätzlich die Absaugung unterstützt.

Gemäß einem nicht in der Zeichnung dargestellten zweiten Ausführungsbeispiel sind mehrere Räumerarme vorgesehen. Dabei ist jeder Räumerarm symmetrisch ausgestaltet, so daß die Winkelhalbierende im Scheitelpunkt in die normale Bewegungsrichtung zeigt.

Dabei weisen die beiden Schenkel zur Winkelhalbierenden einen Winkel von jeweils 30° auf, so daß ein Öffnungswinkel von 60° gebildet wird. Durch die symmetrische Ausgestaltung wirken beide Schenkel gleichermaßen als Rutschführung für das Schüttgut. Damit auch der Mittelbereich geräumt werden kann, ist ein Räumerarm länger ausgestaltet als die anderen Räumerarme, wobei lediglich der Schenkel verlängert ist, der zum Innenraum zeigt.

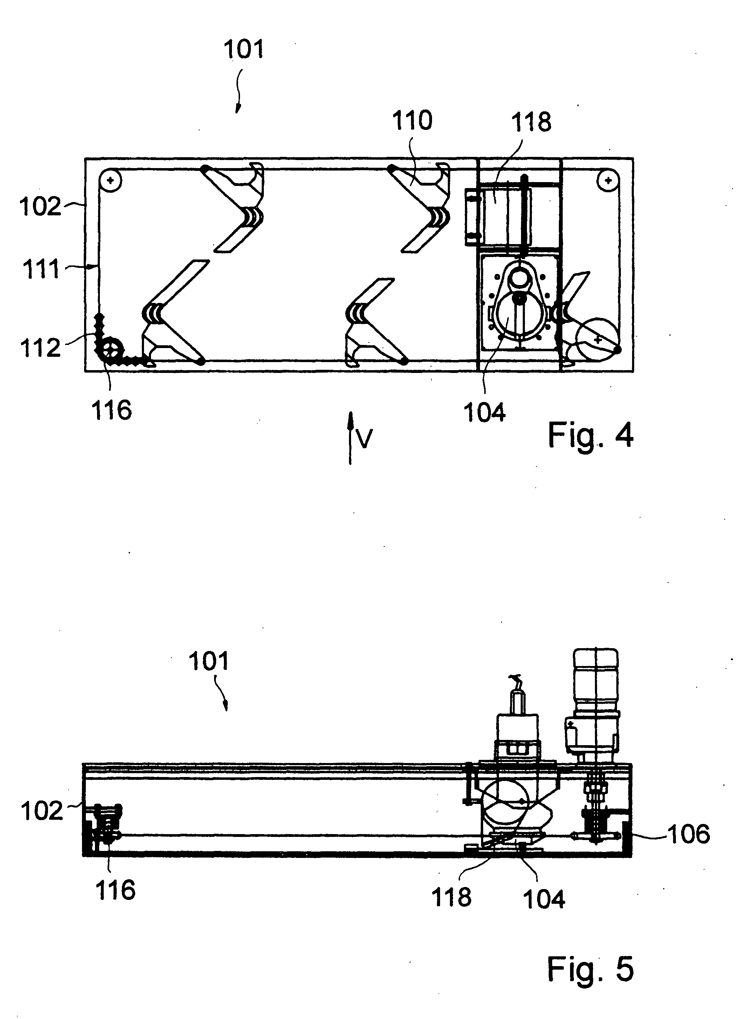

In den Figuren 4 bis 8 ist das dritte Ausführungsbeispiel dargestellt. Der Einfachheit halber sind fünktionsgleiche Bauteile bzgl. des ersten Ausführungsbeispiels mit um 100 höheren Bezugszeichen bezeichnet.

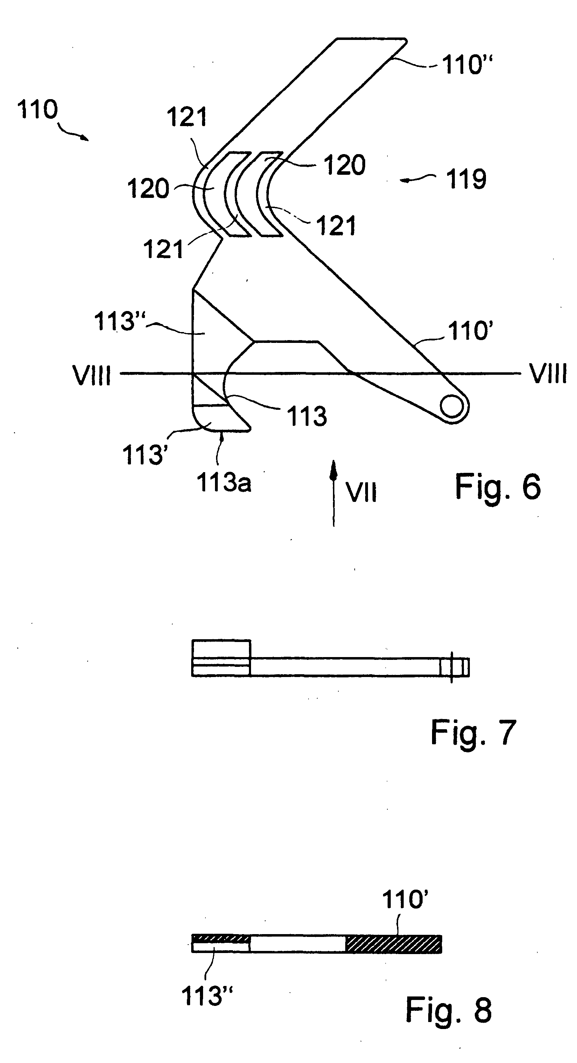

Im Sammelbehälter 101 laufen entlang der Behälterwandung 102, gezogen von dem Zugmittel 111 in Form einer Kette 112, die in den Ecken über Kettenräder 116 läuft, Räumerarme 110 um. Jeder Räumerarm 110 weist zwei Schenkel 110' und 110" auf, wobei der Schenkel 110" zum Innenraum des Sammelbehälters 101 zeigt. Beide Schenkel 110' und 110" schließen einen Winkel von 90° ein, wobei die Winkelhalbierende in Bewegungsrichtung zeigt. Am in der Nähe der Behälterwandung 102 befindlichen Ende 110a des Schenkels 110' ist eine Bohrung vorgesehen, in die ein Verbindungsmittel (nicht dargestellt) greift und eine Verbindung mit der Kette 112 bildet. Im hinteren Bereich des Schenkels 110' ist ein weiterer Schenkel 113 ausgebildet, welcher in der Nähe seines Endes 113a in der Nähe der Behälterwandung 102 eine Räumernase 113' aufweist, die dazu dient das Schüttgut, insbesondere Metallspäne, die sich in unmittelbarer Nähe der Behälterwandung 102 angesammelt haben, nach innen zu befördern, so daß sie vom nachfolgenden Räumerarm 110 mitgenommen werden können. Hierfür ist im mittleren Bereich des Schenkels 113 eine Freifräsung 113" vorgesehen, welche eine entsprechende Rutschfläche für die Metallspäne bildet (vgl. Figuren 6 und 8). Die Freifräsung 113" beim Schenkel 113 weist einen Winkel von 45° zur Bewegungsrichtung auf, wobei der entsprechende Winkel auch 30° bis 60° betragen kann.

Entlang der Behälterwandung 102 sind Führungsschienen 106 vorgesehen, entlang denen die Schenkel 113 entlanggleiten. Hierfür liegt bei einer Geradeausbewegung des Räumerarms 110 eine Gleitfläche des Endes 113a an der Führungsschienen 106 an.

Ferner ist im Sammelbehälter 101 ein Niederdrücker 118 vorgesehen, der größere Spananhäufungen abstreift und dafür sorgt, daß Metallspäne, die unter einem Räumerarm 110 verklemmt sind, wieder loskommen und später von der Transportpumpe 104 erfaßt und aus dem Sammelbehälter 101 entsorgt werden können. Der Niederdrücker 118 weist hierfür eine in Bewegungsrichtung der Räumerarme 110 den Freiraum zwischen Räumerarm 110 und Niederdrücker 118 verringernde Schräge auf. Der Niederdrücker 118 wird durch eine gewichtsbelastete Klappe gebildet. Gemäß dem vorliegenden Ausführungsbeispiel entspricht die Drucklast einer Belastung durch 8 bis 15 kg. Durch den Niederdrücker 118 wird auch gewährleistet, daß die Räumerarme 110 nicht durch Metallspäne angehoben werden und daß sich keine Metallspäne auftürmen, so daß niedrige Bauhöhen möglich sind, ohne die Funktion des sehr tief angeordneten (nicht dargestellten) Spänebrechers zu beeinträchtigen.

Wie in Fig. 6 zu sehen ist, ist im Bereich des Übergangs vom Schenkel 110' zum Schenkel 110" eine Vorrichtung 1.19, gemäß dem Ausführungsbeispiel Ausfräsungen 120, vorgesehen, die verhindert, daß der Räumerarm 110 von der Transportpumpe 104 erfaßt und vor die Ansaugöffnung gezogen wird. Gemäß dem vorliegenden Ausführungsbeispiel sind zwei Ausfräsungen 120 vorgesehen, so daß in diesem Bereich drei Rippen 121 ausgebildet sind, jedoch sind auch beliebige andere Vorrichtungen möglich, die eine durchgehende ebene Oberfläche des Räumerarms 110 unterbrechen.

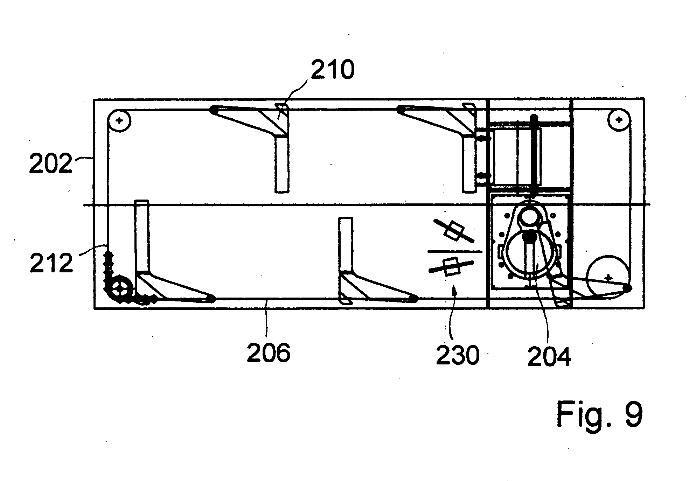

Das in den Figuren 9 bis 12 dargestellte vierte Ausführungsbeispiel weist Räumerarme 210 mit einem im wesentlichen senkrecht zur Bewegungsrichtung weisenden inneren Schenkel 210" und einem leicht schräg zur Bewegungsrichtung weisenden äußeren Schenkel 210' auf, der entsprechend dem vorigen Ausführungsbeispiel an seinem Ende 210a eine Bohrung aufweist, in die ein Verbindungsmittel (nicht dargestellt) greift und eine Verbindung mit der Kette 212 bildet.

Der Schenkel 213 ist gemäß dem vierten Ausführungsbeispiel im hinteren Bereich zwischen den beiden Schenkeln 210' und 210" angeordnet, wobei die Räumemase 213' und das Ende 213a samt nur leicht in Richtung der Behälterwandung 202 überstehen, so daß die Gleitschiene 206 hintergriffen werden kann. Die Freifräsung 213" beim Schenkel 213 entspricht derjenigen des vorigen Ausführungsbeispiels.

Zur Verhinderung des Ansaugens durch die Transportpumpe 204 sind beim vierten Ausführungsbeispiel als Vorrichtung 219 Bohrungen 220 im Schenkel 210" vorgesehen.

Zum Konzentrieren des Schüttguts ist in Umlaufrichtung kurz vor der Transportpumpe 204 eine Zentriervorrichtung 230 vorgesehen, die das Schüttgut von außen und innen punktuell vor dem Räumerarm 210 zusammenschiebt, so daß es von der Transportpumpe 204 optimal erfaßt werden kann. Als Zentriervorrichtung 230 sind gemäß diesem Ausführungsbeispiel Bürsten vorgesehen, jedoch sind beliebige andere Lösungen zum Konzentrieren von Schüttgut möglich.

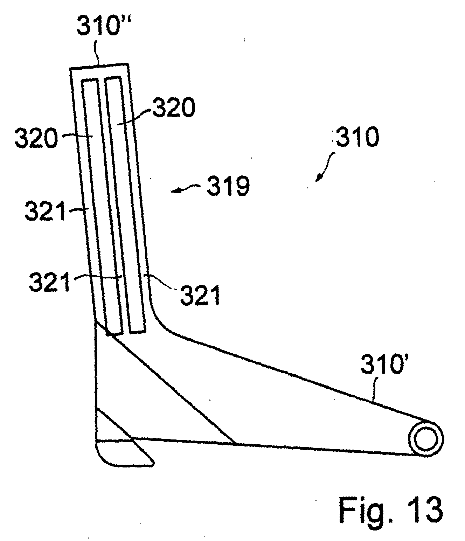

Gemäß dem in Fig. 13 dargestellten fünften Ausführungsbeispiel weist der Räumerarm 310 einen zum Innenraum zeigenden Schenkel 310" auf, der einen Winkel von 92° bis 100° zur Bewegungsrichtung aufweist. Dies verhindert das Verklemmen und Festsetzen von Metallspänen, insbesondere von langen Metallspänen, im Winkelbereich. Die Metallspäne, die sich dennoch in den Räumerarm 310 eingehakt haben, können langsam zur Behältermitte transportiert werden, wo sie sich vom Räumerarm 310 lösen, und werden von einem anderen Räumerarm 310 ergriffen, der sie weitertransportiert, so daß auch diese Metallspäne zur Transportpumpe gelangen und von ihr erfaßt werden können. Aufgrund der geometrischen Ausgestaltung gleiten die Metallspäne, langsam in Richtung des Endes des Schenkels 310". Mit Hilfe eine Zentriervorrichtung, wie sie bspw. beim vierten Ausführungsbeispiel beschriebenen ist, können die Metallspäne wieder zusammengeschoben und direkt der Transportpumpe zugeführt werden.

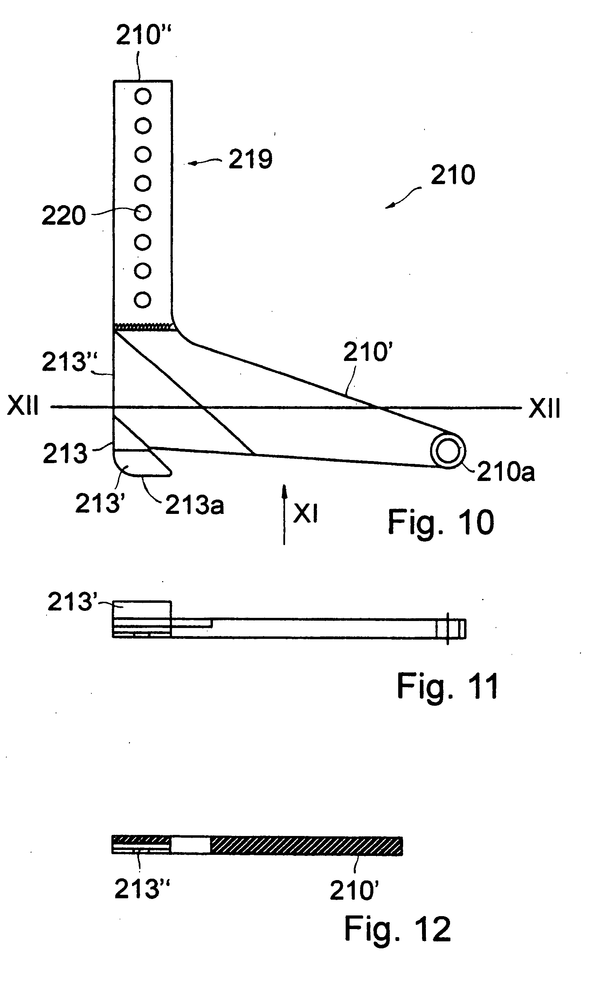

Soll bspw. aus fertigungstechnischen Gründen eine möglichst einfache Zuführung der Metallspäne zur Transportpumpe erfolgen, so kann bei einem Räumerarm, wie er in Fig. 10 dargestellt ist, die Wende- oder Umlenkbewegung in den Ecken, d.h. bei den Umlenkstellen, dazu benutzt werden, daß die Metallspäne nach außen in Richtung Behälterwandung wandern und so der Transportpumpe zugeführt werden können. Idealerweise ist die Transportpumpe kurz hinter einer Umlenkstelle angeordnet. In jedem Fall unterstützt die vor-rück-vor-Bewegung der Räumerarme an den Umlenkstellen die Konzentration der Metallspäne, unabhängig von der geometrischen Ausgestaltung der Räumerarme.

Der Schenkel 310" weist - ähnlich wie der Räumerarm 110 des dritten Ausführungsbeispiels - über annähernd die gesamte Länge des Schenkels 310" zwei Ausfräsungen 320 auf, so daß drei Rippen 321 gebildet werden, welche die Vorrichtung 319 bilden, die verhindert, daß die Transportpumpe den Räumerarm 310 ansaugt.

Bei dem nicht in der Zeichnung dargestellten sechsten Ausführungsbeispiel handelt es sich um eine Variante, die insbesondere für große Sammelbehälter und/oder komplizierte Sammelbehälterformen geeignet ist. Dabei entspricht im wesentlichen das Prinzip eines oder mehrerer mit Hilfe einer Kette gezogenen Räumerarme dem der vorhergehenden Ausführungsbeispiele.

Ein dreieckiger Sammelbehälter, der den Grundriß eines gleichseitigen Dreiecks hat, weist zwei entlang seinen Behälterwandungen umlaufende V-förmige Räumerarme auf, wobei der eine Räumerarm einen längeren, zum Inneren des Sammelbehälters weisenden Schenkel aufweist. Ansonsten entspricht die geometrische Ausgestaltung der Räumerarme der des Räumerarms 10 des ersten Ausführungsbeispiels. Jeder Räumerarm wird mit Hilfe einer Kette entlang dem Behälterboden bewegt. Der Räumerarm ist an einem Befestigungspunkt beweglich mit der Kette verbunden. Ferner liegt - anstelle des zweiten, in Bewegungsrichtung hinten liegenden Befestigungspunktes 14 - der Räumerarm mit einem Schenkel an der Behälterwandung an und wird durch diese geführt. Durch die Räumerarme wird ein Schüttgut, insbesondere Metallpäne einer Transportpumpe zugeführt, die im Bereich des Scheitelpunktes der beiden Schenkel angeordnet ist.

Der Behälterboden weist einen inneren Bereich auf, der von den Räumerarmen nicht geräumt werden kann. Um diesen Bereich von Metallspänen o.ä. zu räumen ist ein Räumer mit bspw. sechs inneren Räumerarmen vorgesehen, der mit Hilfe eines Antriebs drehend angetrieben wird. Die inneren Räumerarme sind derart am Räumer befestigt, daß sie gegebenenfalls auch vom Behälterboden abheben können, um ein Verklemmen zu verhindern. Jeder innere Räumerarm ist spiralförmig ausgebildet, wobei die Spirale entgegen der Drehrichtung größer wird. Die Spirale kann auch durch bspw. gerade oder kreisbogenförmige Bereiche angenähert werden. Jeder innere Räumerarm fördert das Schüttgut von innen nach außen, so daß es in den Bereich des Schenkels des längeren äußeren Räumerarms gelangt und von diesem oder ggf. auch vom Schenkel des äußeren Räumerarms weiter nach außen gefördert und der Transportpumpe zugeführt werden kann.

Die inneren Räumerarme werden vom Antrieb schneller angetrieben als die umlaufenden äußeren Räumerarme vom Zugmittel bewegt werden, so daß die inneren Räumerarme die äußeren Räumerarme überholen. Die inneren Räumerarme interferrieren mit dem längeren äußeren Räumerarm. Beim Überholen wird hierbei der längere äußere Räumerarm vom überholenden inneren Räumerarm mitgenommen, wodurch der Schenkel von der Behälterwandung abgehoben wird. Hat der innere Räumerarm den längeren äußeren Räumerarm überholt, so gelangt der Schenkel wieder in Anlage an die Behälterwandung.

## Patentansprüche

1. Sammelbehälter für Schüttgut mit einer außermittig angeordneten Transportpumpe (4) oder einem Absaugrohr mit einer Behälterwandung (2; 102; 202) und einem im wesentlichen ebenen Behälterboden (3), wobei mindestens ein in der Nähe des Behälterbodens (3) bewegbarer Räumerarm (10; 110; 210; 310) vorgesehen ist, **dadurch gekennzeichnet, daß** der Räumerarm (10; 110; 210; 310) an einem Zugmittel (11; 111; 211) angeordnet ist und im Bereich der Behälterwandung (2; 102; 202) geführt wird.

2. Sammelbehälter nach Anspruch 1, **dadurch gekennzeichnet, daß** das Zugmittel (11; 111; 211) in der Nähe der Behälterwandung (2; 102; 202) im Sammelbehälter (1; 101; 201) umläuft.

3. Sammelbehälter nach Anspruch 1 oder 2, **dadurch gekennzeichnet, daß** der Räumerarm (110; 210; 310) an einem Befestigungspunkt am Zugmittel (111; 211) befestigt und an einem Bereich (113a) in Anlage an der Behälterwandung oder einer Führungsvorrichtung (106; 206) ist.

4. Sammelbehälter nach einem der vorhergehenden Ansprüche, **dadurch gekennzeichnet, daß** das Zugmittel (11; 111; 211) eine Kette (12; 112) ist, die über in Ecken oder Rundungen der Behälterwandung (2; 102) des Sammelbehälters (1; 101; 201) angeordnete Kettenräder (16; 116) läuft.

5. Sammelbehälter nach einem der vorhergehenden Ansprüche, **dadurch gekennzeichnet, daß** der Räumerarm (10; 110; 210; 310) zwei zueinander in einem Winkel angeordnete Schenkel (10', 10"; 110', 110"; 210', 210''; 310', 310'') aufweist.

6. Sammelbehälter nach einem der Ansprüche 1 bis 5, **dadurch gekennzeichnet, daß** das wandnahe Ende des Räumerarms dem innenraumnahen Ende des Räumerarms voreilt.

7. Sammelbehälter nach Anspruch 6, **dadurch gekennzeichnet, daß** der Räumerarm (310) V-förmig ausgebildet ist, wobei das innenraumnahe Ende einen Winkel von min. 90°, vorzugsweise min. 92° zur Bewegungsrichtung einschließt.

8. Sammelbehälter nach Anspruch 6 oder 7, **dadurch gekennzeichnet, daß** der Räumerarm (310) V-förmig ausgebildet ist, wobei das innenraumnahe Ende einen Winkel von max. 100° zur Bewegungsrichtung einschließt.

9. Sammelbehälter nach einem der vorhergehenden Ansprüche, **dadurch gekennzeichnet, daß** mehrere Räumerarme (10) vorgesehen sind, wobei ein Räumerarm (10) auch den mittleren Bereich des Behälterbodens (3) räumt.

10. Sammelbehälter nach einem der vorhergehenden Ansprüche, **dadurch gekennzeichnet, daß** innerhalb des umlaufenden Zugmittels mindestens ein weiterer innerer Räumerarm vorgesehen ist.

11. Sammelbehälter nach einem der vorhergehenden Ansprüche, **dadurch gekennzeichnet, daß** der Sammelbehälter (101) einen Niederdrücker (118) aufweist.

12. Sammelbehälter nach einern der vorhergehenden Ansprüche, **dadurch gekennzeichnet, daß** eine Zentriervorrichtung (230) vorgesehen ist.

13. Sammelbehälter nach einem der vorhergehenden Ansprüche, **dadurch gekennzeichnet, daß** die Konzentration des Schüttguts durch die Umlenkbewegung des Räumerarmes (10; 110; 210; 310) erfolgt.

14. Sammelbehälter nach einem der vorhergehenden Ansprüche, **dadurch gekennzeichnet, daß** der Räumerarm (110; 210; 310) eine Vorrichtung (119; 219; 319) aufweist, welche die bereichsweise durchgehende, ebene Oberfläche unterbricht.

## Claims

1. Collection container for bulk material with a conveying pump (4) or a suction tube arranged off center, with a container wall (2;102;202), and a substantially level container bottom (3), wherein at least one removing arm (10;110;210;310) adapted for movement in the vicinity of the container bottom (3) is provided, **characterized in that** the removing arm (10;110;210;310) is arranged on a traction means (11;111;211) and guided in the region of the container wall (2;102;202).

2. Collection container of claim 1, **characterized in that** the traction means (11;11;211) circulates in the collection container (1;101;201) in the vicinity of the container wall (2;102;202).

3. Collection container of claim 1 or 2, **characterized in that** the removing arm (110;210;310) is mounted to the traction means (11;211) in a mounting point, and that it is in contact with the container wall or a guide arrangement (106;206) in a region (113a).

4. Collection container of one of the foregoing claims, **characterized in that** the traction means (11;111;211) is a chain (12;112), which runs over sprockets (16;116) arranged in corners or curves of the container wall (2;102) of the collection container (1;101;201).

5. Collection container of one of the foregoing claims, **characterized in that** the removing arm (10;110;210;310) includes two legs (10',10'';110', 100'';210',210'';310',310''), which are arranged at an angle relative to each other.

6. Collection container of one of clams 1-5, **characterized in that** the end of the removing arm near the wall leads the end of the removing arm near the interior.

7. Collection container of claim 6, **characterized in that** the removing arm (310) is V-shaped, with its end near the interior enclosing an angle of at least 90°, preferably at least 92° relative to the direction of movement.

8. Collection container of claim 7, **characterized in that** the removing arm (310) is V-shaped, with its end near the interior enclosing an angle of at most 100° relative to the direction of movement.

9. Collection container of one of the foregoing claims, **characterized in that** a plurality of removing arms (10) are provided, with one removing arm (10) also clearing the center region of the container bottom (3).

10. Collection container of one of the foregoing claims, **characterized in that** at least one further inner removing arm is provided within the circulating traction means.

11. Collection container of one of the foregoing claims, **characterized in that** the collection container (101) includes a depressor (118).

12. Collection container of one of the foregoing claims, **characterized in that** a centering device (230) is provided.

13. Collection container of one of the foregoing claims, **characterized in that** the concentration of the bulk materials occurs by the deflecting movement of the removing arm (10;110;210; 310).

14. Collection container of one of the foregoing claims, **characterized in that** the removing arm (110;210;310) includes a device (119;219;319), which interrupts the generally continuous flat surface.

## Revendications

1. Récipient collecteur pour de la matière en vrac avec une pompe alimentaire disposée de façon excentrique (4) ou un tube de succion avec une paroi de récipient (2 ; 102 ; 202) et un fond de récipient (3) essentiellement plan, au moins un bras d'évacuation mobile (10 ; 110 ; 210 ; 310) étant prévu au voisinage du fond du récipient (3), **caractérisé en ce que** le bras d'évacuation (10 ; 110 ; 210 ; 310) est disposé sur un moyen de traction (11 ; 111 ; 211) et est guidé au voisinage de la paroi du récipient (2 ; 102 ; 202).

2. Récipient collecteur selon la revendication 1, **caractérisé en ce que** le moyen de traction (11 ; 111 ; 211) tournent dans le récipient collecteur (1 ; 101 ; 201) au voisinage de la paroi du récipient (2 ; 102 ; 202).

3. Récipient collecteur selon la revendication 1 ou 2, **caractérisé en ce que** le bras d'évacuation (110 ; 210 ; 310) est fixé au moyen de traction (111 ; 211) à un point de fixation et dans une zone (113a) affleurant la paroi du récipient ou d'un dispositif de guidage (106 ; 206).

4. Récipient collecteur selon l'une quelconque des revendications précédentes, **caractérisé en ce que** le moyen de traction (11 ; 111 ; 211) est une chaîne (12 ; 112) qui passe par des barbotins (16 ; 116) disposés dans des coins ou courbures de la paroi du récipient (2 ; 102) du récipient collecteur (1 ; 101 ; 201).

5. Récipient collecteur selon l'une quelconque des revendications précédentes, **caractérisé en ce que** le bras d'évacuation (10 ; 110 ; 210 ; 310) présente deux branches (10', 10'' ; 110', 110'' ; 210', 210'' ; 310', 310'') disposées à un angle l'une par rapport à l'autre.

6. Récipient collecteur selon l'une quelconque des revendications 1 à 5, **caractérisé en ce que** l'extrémité du bras d'évacuation près de la paroi précède l'extrémité du bras d'évacuation près de l'espace intérieur.

7. Récipient collecteur selon la revendication 6, **caractérisé en ce que** le bras d'évacuation (310) est réalisé en forme de V, l'extrémité près de l'espace intérieur enfermant un angle d'au moins 90°, de préférence 92° par rapport à la direction du déplacement.

8. Récipient collecteur selon la revendication 6 ou 7, **caractérisé en ce que** le bras d'évacuation (310) est réalisé en forme de V, l'extrémité près de l'espace intérieur enfermant un angle d'au maximum 100° par rapport à la direction du déplacement.

9. Récipient collecteur selon l'une quelconque des revendications précédentes, **caractérisé en ce que** plusieurs bras d'évacuation (10) sont prévus, un bras d'évacuation (10) évacuant également la zone centrale du fond du récipient (3).

10. Récipient collecteur selon l'une quelconque des revendications précédentes, **caractérisé en ce qu'**au moins un autre bras d'évacuation est prévu à l'intérieur du moyen de traction tournant.

11. Récipient collecteur selon l'une quelconque des revendications précédentes, **caractérisé en ce que** le récipient collecteur (101) présente un élément d'abaissement (118).

12. Récipient collecteur selon l'une quelconque des revendications précédentes, **caractérisé en ce qu'**un dispositif de centrage (230) est prévu.

13. Récipient collecteur selon l'une quelconque des revendications précédentes, **caractérisé en ce que** la concentration de la matière en vrac s'effectue par le mouvement de déviation du bras d'évacuation (10 ; 110 ; 210 ; 310).

14. Récipient de collecte selon l'une quelconque des revendications précédentes, **caractérisé en ce que** le bras d'évacuation (110 ; 210 ; 310) présente un dispositif (119 ; 219 ; 319) qui interrompt par endroits la surface plane continue.
